**Europäisches Patentamt**

**European Patent Office**

**Office européen des brevets**

(11) Veröffentlichungsnummer: **0 157 943**
**A2**

(12) ## EUROPÄISCHE PATENTANMELDUNG

(21) Anmeldenummer: **84116195.3**

(22) Anmeldetag: **22.12.84**

(51) Int. Cl.⁴: **G 07 F 7/06**
**B 62 B 5/00**

(30) Priorität: **14.02.84 DE 3405101**

(43) Veröffentlichungstag der Anmeldung:
**16.10.85 Patentblatt 85/42**

(84) Benannte Vertragsstaaten:
**AT BE CH DE FR GB IT LI NL SE**

(71) Anmelder **Schramme, Karin**
**Säntisblick 6**
**D-7778 Markdorf(DE)**

(71) Anmelder **Bohler, Theresia**
**Glashütten 19/1**
**D-7799 Ilmensee(DE)**

(72) Erfinder: **Schramme, Karin**
**Säntisblick 6**
**D-7778 Markdorf(DE)**

(72) Erfinder: **Bohler, Theresia**
**Glashütten 19/1**
**D-7799 Ilmensee(DE)**

(74) Vertreter: **Engelhardt, Guido, Dipl.-Ing.**
**Montafonstrasse 35 Postfach 1350**
**D-7990 Friedrichshafen 1(DE)**

(54) **Koppelvorrichtung für Einkaufswagen und dgl.**

(57) Bei einer Vorrichtung zur Koppelung von Einkaufswagen (1 1', 1'') miteinander oder mit einer ortsfesten elektrischen Versorgungseinrichtung (3), bestehend aus einer entriegelbaren, aus einer Falle (12) und einen Kupplungsglied (13) gebildeten Kupplung (11) zum fesnen jedoch wahlweise lösbaren Koppeln der Einkaufswagen (1, 1', 1'') in einer platzsparenden Stapelposition und einer mittels einer Münze betätigbaren Sperre, duren die beim Zusammenstellen der Einkaufswagen ein jeweils an einem Einkaufswagen befestigtes Kupplungsglied (13) mit der an dem benachbarten Einkaufswagen angebrachten Falle (12) verrastbar und die Münze bei gelöster Kupplung arretierbar ist und erst bei einem erneuten Aneinanderkoppeln freigegeben wird, ist das Kupplungsglied (11 aus einem zugfesten Kabel (31) und einem an dessen Ende angebrachten mit der an dem benachbarten Einkaufswagen (1') vorgesehenen Falle (12) zusammenwirkenden Stecker, vorzugsweise einem Winkelstecker (32), gebildet. Durch diese Ausgestaltung ist es möglich, Einkaufswagen leicht und rasch, und zwar auch in einem unebenen Gelände, sicher miteinander zu verbinden, da durch das flexible Kabel ein evtl. Höhenversatz ohne Schwierigkeiten auszugleichen ist. Des weiteren werden von dem Kupplungsglied (13) keine Erschütterungen weitergeleitet, die Schalteiemente werden dadurch somit nicht beansprucht, so daß keine Schutzwiderstände notwendig sind und die Stromaufnahme und damit der Energieverbrauch gering gehalten werden.

FIG. 1

0157943

# DIPL.-ING. GUIDO ENGELHARDT PATENTANWALT

**7990 Friedrichshafen**

---

Karin Schramme
7775 Markdorf

Theresia Bohler
7799 Illmensee

---

Koppelvorrichtung für Einkaufswagen und dgl.

---

Die Erfindung bezieht sich auf eine Vorrichtung zur Koppelung von Einkaufswagen, Kofferkulis und dgl. miteinander oder mit einer ortsfesten elektrischen Versorgungseinrichtung, bestehend aus einer entriegelbaren, aus einer Falle und einem Kupplungsglied gebildeten Kupplung zum festen jedoch wahlweise lösbaren Koppeln der Einkaufswagen in einer platzsparenden Stapelposition und einer mittels einer Münze betätigbaren Sperre, durch die beim Zusammenstellen der Einkaufswagen ein jeweils an einem Einkaufswagen befestigtes Kupplungsglied mit der an dem benachbarten Einkaufswagen angebrachten Falle verrastbar und die Münze bei gelöster Kupplung arretiert ist und erst bei erneutem Aneinanderkoppeln freigegeben wird.

Eine derartige Sicherungseinrichtung ist durch die DE-OS 31 27 94o bekannt. Als Koppelglied ist hierbei ein starres stangenartiges Steckerteil vorgesehen, das von einem im unteren Bereich eines Einkaufswagens an diesem

./.

befestigten Gehäuse absteht und in ein auf der gegenüberliegenden Seite eines an einem benachbarten Einkaufswagen angebrachten Muffenteils selbsttätig einführbar ist. Auf diese Weise sind zwar Einkaufswagen zu
sichern, indem die Kupplung nur gelöst wird, wenn mit
Hilfe einer Münze eine Entriegelungseinrichtung
betätigt wird, das Einschieben der Kupplungsglieder in
die Muffenteile ist jedoch oftmals mit erheblichen
Schwierigkeiten verbunden. Da die Kupplungs- und Muffenteile, um diese ineinanderschieben zu können, die gleiche
Höhenlage aufweisen müssen, ist bei unebenem Gelände ein
Ankoppeln mitunter nicht möglich oder es sind besondere
Führungsmittel erforderlich, damit ein Höhenausgleich
vorgenommen wird. Vor allem aber ist von Nachteil, daß
durch die starren Kupplungsglieder jedwede Erschütterung,
die insbesondere durch das Ankoppeln eines Einkaufswagens
oder dessen Entnahme hervorgerufen werden, auf alle
Schaltelemente der angekoppelten Einkaufswagen übertragen
wird und, damit ein dadurch bedingtes selbsttätiges Lösen
ausgeschlossen ist, jeweils ein Schutzwiderstand vorgesehen werden muß. Derartige Schutzwiderstände haben aber
ständig eine hohe Stromaufnahme, so daß die Betriebskosten
aufgrund des hohen Verbrauches an elektrischer Energie
relativ hoch sind und auch die Kontakte stark beansprucht
werden. Trotz des großen Bauaufwandes ist demnach ein
störungsfreier Betrieb über einen längeren Zeitraum bei
dieser Sicherungseinrichtung nicht gewährleistet.

Aufgabe der Erfindung ist es daher, die Vorrichtung der
vorgenannten Art in der Weise zu verbessern, daß diese
bei geringem Bauaufwand nicht nur wirtschaftlich herstellbar ist, sondern auch eine hohe Funktionssicherheit bei
langer Lebensdauer aufweist. Vor allem aber soll errreicht
werden, daß Einkaufswagen leicht und rasch, und zwar auch

./.

in einem unebenen Gelände miteinander sicher zu verbinden sind und daß die Stromaufnahme und somit die Betriebskosten gering gehalten werden. Des weiteren sollen Einkaufswagen auch nachträglich, ohne daß bauliche Veränderungen vorzunehmen sind, mit einer solchen Vorrichtung ausgerüstet werden können.

Gemäß der Erfindung wird dies bei einer Vorrichtung der vorgenannten Gattung dadurch erreicht, daß die Kupplungsglieder jeweils aus einem zugfesten Kabel und einem an dessen freiem Ende angebrachten mit der an einem benachbarten Einkaufswagen vorgesehenen Falle zusammenwirkenden Stecker, vorzugsweise einem Winkelstecker, gebildet sind.

Zweckmäßig ist es hierbei, die Falle durch eine vorzugsweise in eine Seitenwand eines die Sperre sowie die Sperrglieder der Kupplung und die Kontakte aufnehmenden Gehäuses eingearbeitete senkrecht zu der Längsachse des Einkaufswagens gerichtete T-förmig gestaltete Ausnehmung zu bilden, wobei die Ausnehmung, um auch hohe Zugkräfte aufnehmen zu können, mit einer senkrecht zu der Längsachse des Einkaufswagens verlaufenden Anschlagfläche für den Stecker versehen sein sollte.

Des weiteren sollte der Stecker mit einer in Achsrichtung des Einkaufswagens verlaufenden Aufnahmenut, die eine achssenkrecht gerichtete Anlagefläche aufweist, für den Anker eines Hubmagneten versehen sein. Außerdem sollte, um das Einführen des Steckers zu erleichtern, dieser bei einem Winkelstecker der mit der Aufnahmenut versehene Schenkel an seinem vorderen Ende eine Einführschräge aufweisen.

./.

Zum Auswerfen des Steckers ist es ferner angebracht, in diesen oder in das diesen aufnehmende Gehäuse eine Druckfeder einzusetzen, die bei einem Winkelstecker vorzugsweise auf einen angeformten, zwischen dessen Schenkeln angeordneten in einem Schlitz des Gehäuses geführten Steg einwirkt.

Das Kabel sollte, damit auch hohe Zugkräfte zu übertragen sind, mittels eines in dieses eingesetzten Zugseiles, das an den Enden jeweils mit einem Nippel oder dgl. versehen ist, an dem Gehäuse und dem Stecker zugfest befestigt sein.

Die Schaltelemente der Sperre und der Kupplung sind zweckmäßigerweise auf einer gemeinsamen Leiterplatte anzuordnen, die in das die Bauteile der Kupplung und der Sperre aufnehmende Gehäuse eingesetzt ist, so daß sich eine kompakte Bauform ergibt.

Zum elektrischen Anschluß des Steckers können in diesem zwei Kontaktbüchsen und in der Leiterplatte mit in diese einführbare Kontaktstifte, vorzugsweise Büschelstecker, vorgesehen werden.

Um ohne Schwierigkeiten Einkaufswagen mit der erfindungsgemäß ausgebildeten Vorrichtung nachrüsten zu können, sollte das die Bauteile der Kupplung, die Sperre sowie die Leiterplatte aufnehmende vorzugsweise zweiteilig ausgebildete Gehäuse jeweils auf dem Führungsbügel eines Einkaufswagens angeordnet werden.

Des weiteren ist es angebracht, den Münzschacht der Sperre zumindest auf einer der beiden Schmalseiten durch ein auswechselbar angeordnetes auf der Leiterplatte befestigtes Einsatzstück zu begrenzen. Die Sperre kann somit rasch auf eine andere Münzart umgestellt werden.

Die gemäß der Erfindung ausgebildete Vorrichtung zur Sicherung von Einkaufswagen ist nicht nur einfach in der konstruktiven Ausgestaltung und somit auf wirtschaftliche Weise herstellbar, sondern auch leicht zu handhaben und äußerst betriebssicher. Besteht nämlich das mit der Falle eines benachbarten Einkaufswagens zusammenwirkende Kupplungsglied aus einem zugfesten, flexiblen Kabel und einem an dessen freiem Ende angebrachten Stecker, so ist es möglich, Einkaufswagen und zwar auch in sehr unebenem Gelände aneinanderzukoppeln, indem lediglich der Stecker in die Falle des in Stapelposition vorhergehenden Einkaufswagens einzustecken ist. Durch das flexible Kabel ist dabei ein evtl. Höhenversatz ohne weiteres auszugleichen, dennoch ist eine zugfeste Verbindung gegeben. Vor allem aber ist dabei von Vorteil, daß Erschütterungen jeweder Art von den Kabeln nicht weitergeleitet und auf den jeweils benachbarten Einkaufswagen übertragen werden, die Schaltelemente der Kupplung und der Sperre werden somit dadurch nicht beansprucht. Und da die Microschalter keinen Erschütterungen ausgesetzt sind, sind auch keine Schutzwiderstände notwendig, die Stromaufnahme und damit der Energieverbrauch und infolge davon auch die Betriebskosten können somit in einem erheblichen Maße gegenüber der vorgenannten Ausgestaltung reduziert werden. Bei einfacher Montage der Vorrichtung ist demnach über einen langen Zeitraum eine hohe Betriebssicherheit gewährleistet.

In der Zeichnung ist ein Ausführungsbeispiel der gemäß der Erfindung ausgebildeten Vorrichtung zur Sicherung von Einkaufswagen dargestellt und nachfolgend im einzelnen erläutert. Hierbei zeigen:

./.

Fig. 1   mehrere Einkaufwagen in einer Stapelposition,

Fig. 2   die an jedem der Einkaufswagen nach Fig. 1
         angebrachte Kupplung und Sperre in einer
         vergrößerten Darstellung, in Seitenansicht,

Fig. 3   einen achssenkrechten Teilschnitt durch
         die Kupplung nach Fig. 2 mit in deren Falle
         eingerastetem Kupplungsglied,

Fig. 4   die bei der Kupplung und der Sperre nach

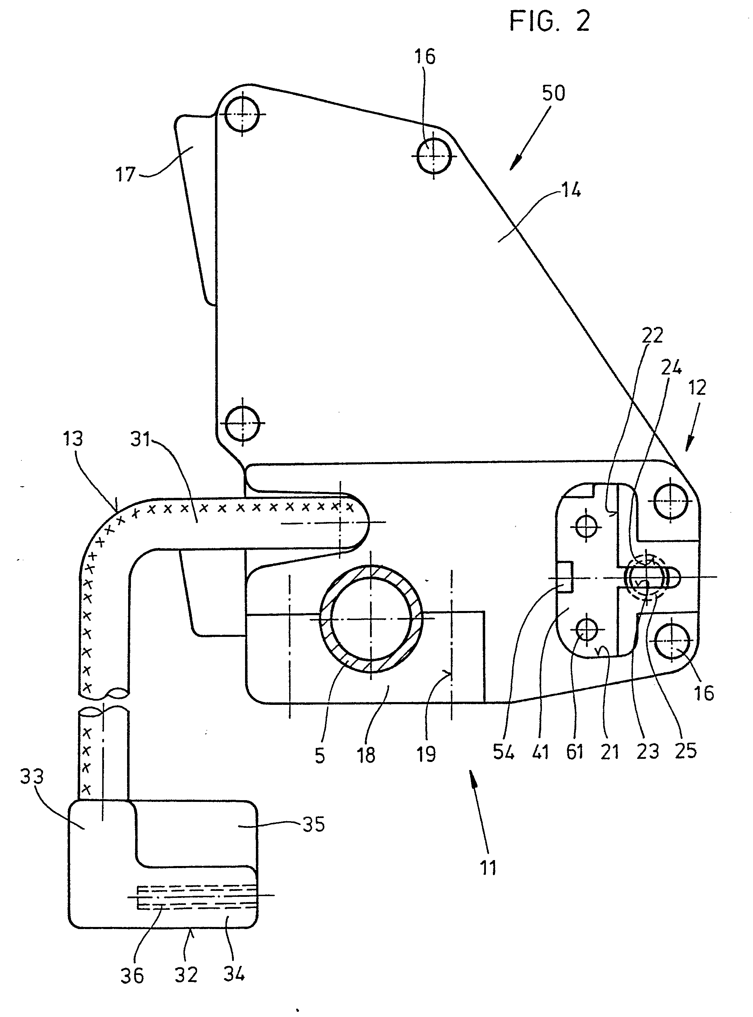

         Fig. 2 vorgesehene Leiterplatte      und

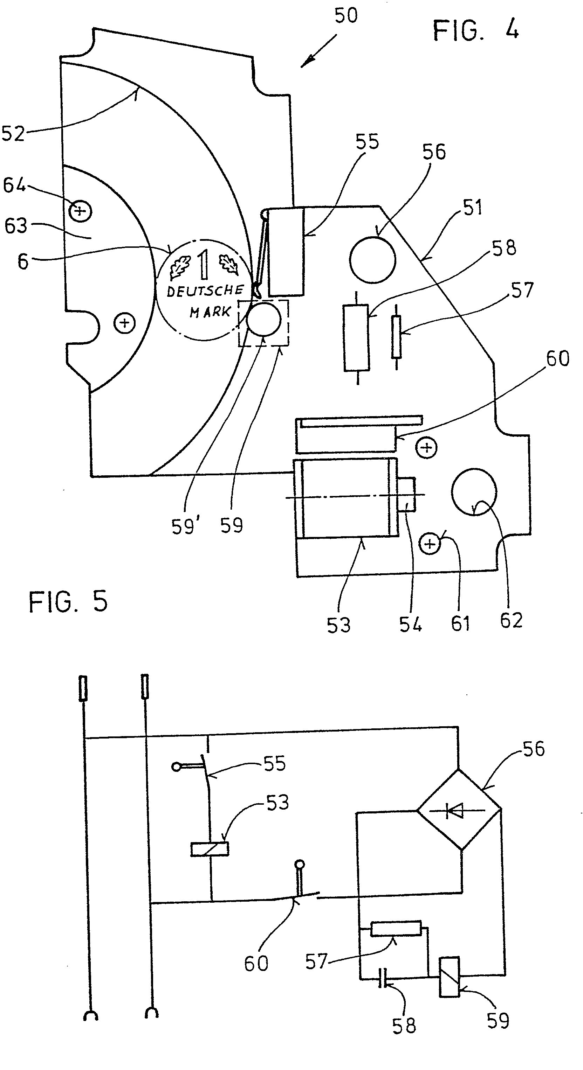

Fig. 5   den Schaltplan für die auf der Leiterplatte
         nach Fig. 4 angeordneten elektrischen
         Schaltelemente.

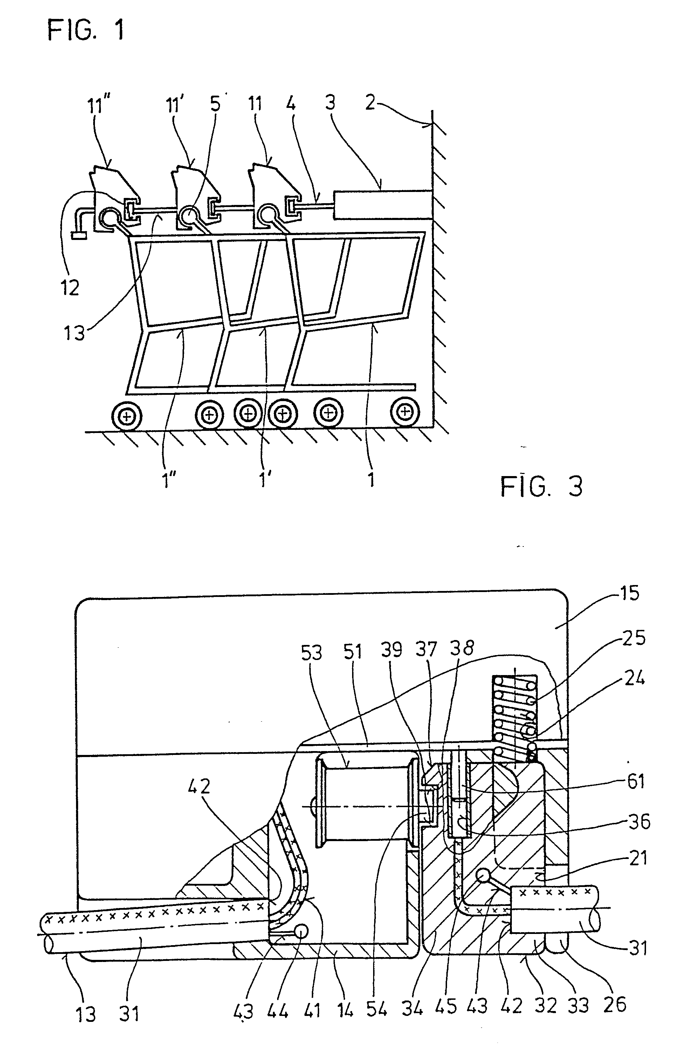

Die in Fig. 1 schematisch dargestellten Einkaufswagen 1,
1', 1''... sind in einer Stapelposition mit Hilfe von an
diesen angebrachten Koppelvorrichtungen oder Kupplungen
11, 11', 11''... arretiert. Um dies bewerkstelligen zu
können, ist an einer Wand 2 eines Gebäudes oder einem
anderen ortsfesten Bauteil eine elektrische Versorgungseinrichtung 3, die ein Koppelglied 4 aufweist, angebracht
und die auf dem Führungsbügel 5 der Einkaufswagen 1, 1',
1''... befestigten Koppelvorrichtungen 11, 11', 11''...
sind mit diesem und miteinander lösbar verbunden.

Die Koppelvorrichtungen 11, 11', 11''... weisen dazu
jeweils eine Falle 12 sowie ein Kupplungsglied 13 auf,
außerdem ist diesen je eine mit einer Münze 6 betätigbare
Sperre 5o zugeordnet, so daß beim Zusammenstellen der

./.

Einkaufswagen 1, 1', 1''... gemäß Fig. 1 die Kupplungsglieder 13 mit der an einem benachbarten Einkaufswagen angebrachten Falle 12 verrastbar sind. Bei gelöster Kupplung 11, d. h. wenn ein Einkaufswagen von dem Stapel abgekuppelt wird, ist die Münze 6 arretiert und diese wird erst freigegeben, wenn der Einkaufswagen wiederum an einen Stapel angekoppelt wird.

Die Falle 12 der Kupplung 11 besteht aus einer T-förmig gestalteten Ausnehmung 21, die in eine Seitenwand eines der beiden Gehäuseteile 14 und 15, die die einzelnen Bauteile der Kupplung 11 sowie der Sperre 5o aufnehmen und mittels Schrauben 16 zusammengehalten sind, eingearbeitet ist. Das Kupplungsglied 13 besteht dagegen aus einem flexiblen zugfesten Kabel 31 und einem an dessen Ende angebrachten Winkelstecker 32, der, wie dies der Fig. 3 entnommen werden kann, in die Ausnehmung 21 einsetzbar ist. Die beiden Schenkel 33 und 34 des Winkelsteckers 32 sind durch einen Steg 35 miteinander verbunden und in das Gehäuseteil 14 ist im Bereich der Ausnehmung 21 ein Schlitz 23 eingearbeitet, in den der Steg 35 einführbar ist.

Das Kabel 31 besteht nicht nur aus den mit einer Ummantelung 42 versehenen Stromleitungen 41, sondern es ist auch mit einem Zugseil 43 versehen, an dessen Enden Nippel 44 und 45 angeordnet sind, die mit dem Gehäuseteil 14 bzw. dem Winkelstecker 32 fest verbunden sind. Auf diese Weise können, zumal der Winkelstecker 32 mit seinem Schenkel 34 an einer in der Ausnehmung 21 vorgesehenen, achssenkrecht zur Zugrichtung verlaufenden Anschlagfläche 22 anliegt, hohe Zugkräfte abgestützt werden.

./.

Um das Einführen des Winkelsteckers 32 zu erleichtern, ist an dessen Schenkel 34 im vorderen Bereich eine Einführschräge 37 angearbeitet, mittels der auch der Anker 54 eines Hubmagneten 53, durch den der Winkelstecker 32 durch Einrasten in eine in den Schenkel 34 eingearbeitete mit einer Anschlagfläche 39 ausgestatteten Ausnehmung 38 gehalten ist, entgegen der Kraft einer Feder zurückgedrückt werden kann. Bei erregtem Hubmagneten 53 wird dagegen der Winkelstecker 32 durch eine Feder 25, die in einer in das Gehäuseteil 15 eingearbeiteten Bohrung 24 eingesetzt ist, selbsttätig nach außen gedrückt. Bei eingerastetem Winkelstecker 32 ist das von diesem abstehende Kabel 31 des weiteren in einem in das Gehäuseteil 14 eingearbeiteten Schlitz 26 zusätzlich geführt.

Zur Übertragung der elektrischen Energie dienen zwei in den Schenkel 34 des Winkelsteckers 32 eingesetzte Büchsen 36 sowie Kontaktstifte 61, die auf einer zwischen den Gehäuseteilen 14 und 15 angeordneten Leiterplatte 51 angebracht sind und in die Büchsen 36 eingreifen können. Die Leiterplatte 51 ist des weiteren, wie dies in Fig. 4 dargestellt ist, mit einem Münzschacht 52, dessen Breite mit Hilfe eines auf Stiften 64 gehaltenen auswechselbaren Einsatzes 63 veränderbar ist, für die durch einen Münzeinwurf 17 in die Sperre 50 einzubringende Münze 6 versehen, außerdem ist auf dieser der Hubmagnet 53 zur Arretierung des Winkelsteckers 32 sowie die weiteren elektrischen Schaltelemente der Kupplung 11 und der Sperre 50 angeordnet. Diese Schaltelemente bestehen aus einem Microschalter 55, der durch die Münze 6 betätigbar ist, einem Gleichrichter 56, einem Widerstand 57, einem Kondensator 58 sowie einem weiteren Hubmagneten 59, dessen Anker 59' in den Münzschacht 52 hinreinragt, und einem durch den

./.

Winkelstecker 32 betätigbaren Microschalter 6o. Des weiteren ist in die Leiterplatte 51 eine Freisparung 62 für die auf den Winkelstecker 32 einwirkende Feder 25 eingearbeitet.

Wird bei einem in Stapelposition gemäß Fig. 1 befindlichen Einkaufswagen 1'' durch den Münzeinwurf 17 eine Münze 6 in den Münzschacht 52 geworfen, so wird der Microschalter 52 betätigt und der Hubmagnet 53 wird an den Stromkreis angeschlossen und somit erregt. Der Anker 54 des Hubmagneten 53 wird dadurch aus der Ausnehmung 38 des Winkelsteckers 32 zurückgezogen und dieser wird durch die Kraft der Feder 25 nach außen gedrückt, so daß die Verbindung mit dem vorhergehenden Einkaufswagen 11' gelöst ist und der Einkaufswagen 1'' weggefahren werden kann. Die Münze 6 behält dabei die in Fig. 4 dargestellte Position bei, da durch den in den Münzschacht 52 ragenden Anker 59'des Hubmagneten 59 ein Durchfallen verhindert wird.

Wird nach beendetem Einkauf der Winkelstecker 32 des Einkaufswagens 1'' wiederum in die Ausnehmung 21 der Falle 12 des vorhergehenden Einkaufswagens 11' eingeführt, so wird durch den Anker 54 der Winkelstecker 32 selbsttätig sofort verriegelt und über die Kontaktbuchsen 36 und die Kontaktstifte 61 wird eine elektrische Verbindung hergestellt. Gleichzeitig wird aber auch der Microschalter 6o betätigt und somit der Hubmagnet 59 an den Stromkreis angeschlossen und erregt. Dadurch wird der Anker 59' zurückgezogen und die in dem Münzschacht 52 befindliche Münze 6 wird freigegeben. Bei angekoppeltem Einkaufswagen 1'' kann somit die zum Entkoppeln benötigte Münze 6 wiederum dem Münzschacht 52 entnommen werden.

./.

Das bei der Kupplungsvorrichtung 11, die durch eine an den Gehäuseteilen 14 und 15 mittels Schrauben 19 befestigte Spannplatte 18 leicht auf dem Führungsbügel 5 der Einkaufswagen 1 zu befestigen ist, vorgesehene als flexibles Kabel ausgebildete Kupplungsglied 13 ist zwar von Hand in die Falle 12 des benachbarten Einkaufswagens einzuführen, durch die Flexibilität ist aber ein Höhenversatz ohne weiteres auszugleichen, auch werden keine Erschütterungen, die zwangsläufig beim An- und Abkoppeln von Einkaufswagen entstehen, auf die elektrischen Schaltelemente übertragen, Schutzwiderstände mit hoher Stromaufnahme, die einen hohen Stromverbrauch bedingen, sind demnach nicht erforderlich. Dennoch ist aufgrund der Ausbildung des Kupplungsgliedes 13 als zugfestes Kabel und der Ausgestaltung der Falle 12 eine feste Verbindung zwischen den einzelnen Einkaufswagen gewährleistet.

1o. Februar 1984    e-1
A 7578

DIPL.-ING. GUIDO ENGELHARDT PATENTANWALT

7990 Friedrichshafen

0157943

Karin Schramme
7778 Markdorf

Theresia Bohler
7799 Illmensee

P a t e n t a n s p r ü c h e :

1. Vorrichtung zur Koppelung von Einkaufswagen, Kofferkulis und dgl. miteinander oder mit einer ortsfesten
elektrischen Versorgungseinrichtung, bestehend aus
einer entriegelbaren, aus einer Falle und einem
Kupplungsglied gebildeten Kupplung zum festen jedoch
wahlweise lösbaren Koppeln der Einkaufswagen in einer
platzsparenden Stapelposition, und einer mittels einer
Münze betätigbaren Sperre, durch die beim Zusammenstellen der Einkaufswagen ein jeweils an einem Einkaufswagen befestigtes Kupplungsglied mit der an dem benachbarten Einkaufswagen angebrachten Falle verrastbar und
die Münze bei gelöster Kupplung arretiert ist und erst
bei erneutem Aneinanderkoppeln freigegeben wird,

d a d u r c h   g e k e n n z e i c h n e t ,

./.

daß die Kupplungsglieder (13) jeweils aus einem zugfesten Kabel (31) und einem an dessen Ende angebrachten mit der an einem benachbarten Einkaufswagen (1') vorgesehenen Falle (12) zusammenwirkenden Stecker, vorzugsweise Winkelstecker (32), gebildet sind.

2. Vorrichtung nach Anspruch 1,

d a d u r c h   g e k e n n z e i c h n e t ,

daß die Falle (12) durch eine vorzugsweise in eine Seitenwand eines die Sperre (5o) sowie die Sperrglieder (Hubmagnet 53) der Kupplung (11) und die Kontakte (51) aufnehmenden Gehäuses (14) eingearbeitete senkrecht zu der Längsachse des Einkaufswagens (1) gerichtete T-förmig gestaltete Ausnehmung (21) gebildet ist.

3. Vorrichtung nach Anspruch 2,

d a d u r c h   g e k e n n z e i c h n e t ,

daß die Ausnehmung (21) mit einer senkrecht zu der Längsachse des Einkaufswagens (1) verlaufenden Anschlagfläche (22) für den Stecker (32) versehen ist.

4. Vorrichtung nach einem oder mehreren der Ansprüche 1 bis 3,

d a d u r c h   g e k e n n z e i c h n e t ,

daß der Stecker (32) mit einer in Achsrichtung des Einkaufswagens (1) verlaufenden Aufnahmenut (38), die eine achssenkrecht gerichtete Anlagefläche (39) aufweist, für den Anker (54) eines Hubmagneten (53) versehen ist.

./.

5. Vorrichtung nach einem oder mehreren der
Ansprüche 1 bis 4,

d a d u r c h   g e k e n n z e i c h n e t ,

daß der Stecker (32), bei einem Winkelstecker (32) der
mit der Aufnahmenut (38) versehene Schenkel (34), an
seinem vorderen Ende eine Einführschräge (37) aufweist.

6. Vorrichtung nach einem oder mehreren der
Ansprüche 1 bis 5,

d a d u r c h   g e k e n n z e i c h n e t ,

daß zum Auswerfen des Steckers (32) in diesen oder in
das diesen aufnehmende Gehäuse (14, 15) eine Druckfeder (25) eingesetzt ist, die bei einem Winkelstecker
(32) vorzugsweise auf einen angeformten, zwischen
dessen Schenkeln (33, 34) angeordneten in einem Schlitz
(23) des Gehäuses (14) geführten Steg (35) einwirkt.

7. Vorrichtung nach einem oder mehreren der
Ansprüche 1 bis 6,

d a d u r c h   g e k e n n z e i c h n e t ,

daß das Kabel (31) mittels eines in dieses eingesetzten
Zugseiles (43), das an den Enden jeweils mit einem
Nippel (44, 45) oder dgl. versehen ist, an dem Gehäuse
(14) und dem Stecker (32) zugfest befestigt ist.

./.

- 4 -

0157943

8. Vorrichtung nach einem oder mehreren der
   Ansprüche 1 bis 7,

   d a d u r c h   g e k e n n z e i c h n e t ,

   daß die Schaltelemente (53, 55, 56, 57, 58, 59, 6o)
   der Sperre (5o) und der Kupplung (11) auf einer
   gemeinsamen Leiterplatte (51) angeordnet sind, die
   in das die Bauteile der Kupplung (11) und der Sperre
   (5o) aufnehmende Gehäuse (14, 15) eingesetzt ist.

9. Vorrichtung nach einem oder mehreren der
   Ansprüche 1 bis 8,

   d a d u r c h   g e k e n n z e i c h n e t ,

   daß zum elektrischen Anschluß des Steckers (32)
   in diesem zwei Kontaktbüchsen (36) und in der Leiterplatte (51) mit in diese einführbare Kontaktstifte
   (61), vorzugsweise Büschelstecker,vorgesehen sind.

1o. Vorrichtung nach einem oder mehreren der
    Ansprüche 1 bis 9,

    d a d u r c h   g e k e n n z e i c h n e t ,

    daß das die Bauteile der Kupplung (11),die Sperre (15)
    sowie die Leiterplatte (51) aufnehmende vorzugsweise
    zweiteilig ausgebildete Gehäuse (14, 15) jeweils auf
    dem Führungsbügel (5) eines Einkaufswagens (1) angeordnet ist.

./.

11. Vorrichtung nach einem oder mehreren der
Ansprüche 1 bis 1o,

d a d u r c h   g e k e n n z e i c h n e t ,

daß der Münzschacht (52) der Sperre (5o) zumindest
auf einer der beiden Schmalseiten durch ein auswechselbar angeordnetes auf der Leiterplatte (51)
befestigtes Einsatzstück (63) begrenzt  ist.

9. Februar 1984    e-1
A 7558

FIG. 1

FIG. 3

FIG. 2

FIG. 4

FIG. 5